# EUROPEAN PATENT APPLICATION

(11) **EP 4 083 771 A1**
(43) Date of publication of application: **02.11.2022**
(21) Application number: 20905345.3
(22) Date of filing: 28.12.2020
(51) Int. Cl.: G06F 3/0482, G06F 3/0485, H04M 1/00

(54) **CONTROL DEVICE AND CONTROL PROGRAM**

(30) Priority: 27.12.2019 JP 2019239028
(71) Applicant: FUJIFILM Corporation, Tokyo 106-8620 (JP)
(72) Inventor: SEKINE, Yoshihiro, Ashigarakami-gun, Kanagawa 258-8538 (JP); MISHIMA, Yu, Ashigarakami-gun, Kanagawa 258-8538 (JP); SHIMIZU, Yuki, Ashigarakami-gun, Kanagawa 258-8538 (JP)
(74) Representative: Parker, Andrew James
(86) International application number: PCT/JP2020/049162
(87) International publication number: WO 2021/132718

(57) **Abstract**

A control device includes a display control unit that controls display of an item selection screen at which an item list including a plurality of items to be selected by a user is displayed in a scrollable manner, in which at least one of a list selection button for selecting the item list displayed at the item selection screen or a function selection button for selecting a function to be performed by an information apparatus is displayed at the item selection screen in addition to the item list, at least one of the list selection button or the function selection button is arranged at an end side of the item list in a scrolling direction at the item selection screen, and the display control unit reduces the size of a display region of at least one of the list selection button or the function selection button at the item selection screen in a case in which the item list is scrolled.

## Description

### Technical Field

The technology of the present disclosure relates to a control device and a control program.

### Background Art

As an information apparatus, a so-called multi-function peripheral that executes a plurality of functions such as a copy function, a scanning function, a facsimile function, and a printing function is known. There is a technology in which task items executable by the information apparatus are displayed as an item list in a display screen of the information apparatus in order to enable easy and quick selection of a function to be executed by such an information apparatus such as a multi-function peripheral.

In the case of such an item list, since not all of a large number of task items in one list can be displayed on the display screen, the task items are sequentially displayed by a scrolling operation. It is desirable that as many task items as possible are displayed on the display screen in order to quickly select and operate task items, but the area of the display screen is limited.

A technology for increasing the number of items displayed on a display screen includes a technology disclosed in Japanese Patent Application Laid-Open (JP-A) No. 2002-373312. In the disclosed technology, in controlling a display content, when an item list is scrolled, individual items are displayed while being reduced in size. In the disclosed technology, display of operation buttons and the like other than the item list is not mentioned.

Japanese Patent Application Laid-Open (JP-A) No. 2009-219163 discloses a technology in which a display region of an item list is expanded by removing displayed elements other than the item list when the item list is scrolled.

### SUMMARY OF INVENTION

### Technical Problem

In the technology disclosed in JP-A No. 2009-219163, display regions for displaying the operation buttons and the like other than the item list are arranged above and below the item list, and the upper or lower display regions are removed according to a scrolling direction. Therefore, a desired operation button cannot be operated when scrolling through the item list in some cases.

Examples of the operation button displayed on the display screen together with the item list include a list selection button for selecting the item list displayed on the display screen, a function selection button for selecting a function to be executed by the information apparatus, and the like.

An object of the technology of the disclosure is to provide a control device and a control program capable of expanding a display region of an item list while maintaining a state in which an operation for a list selection button or a function selection button is performable when scrolling through the item list.

### Solution to Problem

A first aspect is a control device including a display control unit that controls display of an item selection screen at which an item list including a plurality of items to be selected by a user is displayed in a scrollable manner, in which at least one of a list selection button for selecting the item list displayed at the item selection screen or a function selection button for selecting a function to be performed by an information apparatus is displayed at the item selection screen in addition to the item list, at least one of the list selection button or the function selection button is arranged at an end side of the item list in a scrolling direction at the item selection screen, and the display control unit reduces the size of a display region of at least one of the list selection button or the function selection button at the item selection screen in a case in which the item list is scrolled.

A second aspect is the control device according to the first aspect, in which the list selection button is a button for selecting one item list to be displayed at the item selection screen, from a plurality of types of item lists, and the display control unit reduces the size of the display region of the list selection button in a case in which the item list is scrolled.

A third aspect is the control device according to the first or second aspect, in which the display control unit superimposes the display region, which is reduced in size, on the item list in a case in which the item list is scrolled.

A fourth aspect is the control device according to any one of the first to third aspects, in which the display control unit displays the list selection button at one end side of the item list in the scrolling direction and displays the function selection button at another end side of the item list in the scrolling direction.

A fifth aspect is the control device according to the fourth aspect, in which the display control unit reduces the size of the display region of the list selection button displayed at the item selection screen and hides the function selection button, in a case in which the item list is scrolled.

A sixth aspect is the control device according to the fifth aspect, in which in a case in which the scrolling of the item list is stopped, the display control unit displays the hidden function selection button, and then returns the display region reduced in size to an original display state.

A seventh aspect is a control program for causing a computer to function as a control device, the control device including a display control unit that controls display of an item selection screen at which an item list including a plurality of items to be selected by a user is displayed in a scrollable manner, in which at least one of a list selection button for selecting the item list displayed at the item selection screen or a function selection button for selecting a function to be performed by an information apparatus is displayed at the item selection screen in addition to the item list, at least one of the list selection button or the function selection button is arranged at an end side of the item list in a scrolling direction at the item selection screen, and the display control unit reduces the size of a display region of at least one of the list selection button or the function selection button at the item selection screen in a case in which the item list is scrolled.

### Advantageous Effects of Invention

According to the technology of the disclosure, it is possible to expand a display region of an item list while maintaining a state in which an operation for a list selection button or a function selection button is performable when scrolling through the item list.

### BRIEF DESCRIPTION OF DRAWINGS

Fig. 1 is an exterior view of a multi-function peripheral.
Fig. 2 is a block diagram illustrating a hardware configuration of the multi-function peripheral.
Fig. 3 is a block diagram illustrating a functional configuration of a control device.
Fig. 4 is a view illustrating an item selection screen.
Fig. 5 is a view illustrating an execution screen.
Fig. 6 is a view illustrating the item selection screen in which an address list is displayed.
Fig. 7 is a view illustrating the item selection screen in which a document list is displayed.
Fig. 8 is a view illustrating a state in which an item list is scrolled in the item selection screen.
Fig. 9 is a flowchart illustrating a flow of display control processing.

### DESCRIPTION OF EMBODIMENTS

Hereinafter, an example of an embodiment of the technology of the present disclosure will be described with reference to the drawings.

### (Multi-Function Peripheral 100)

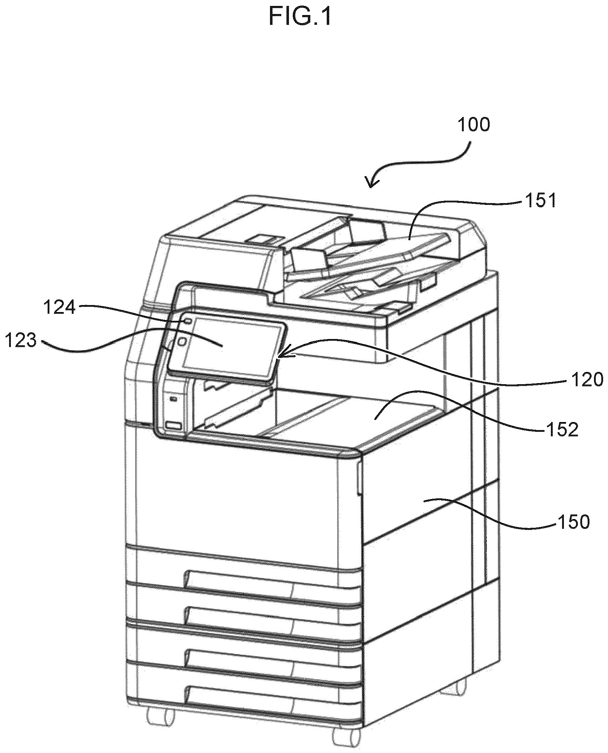

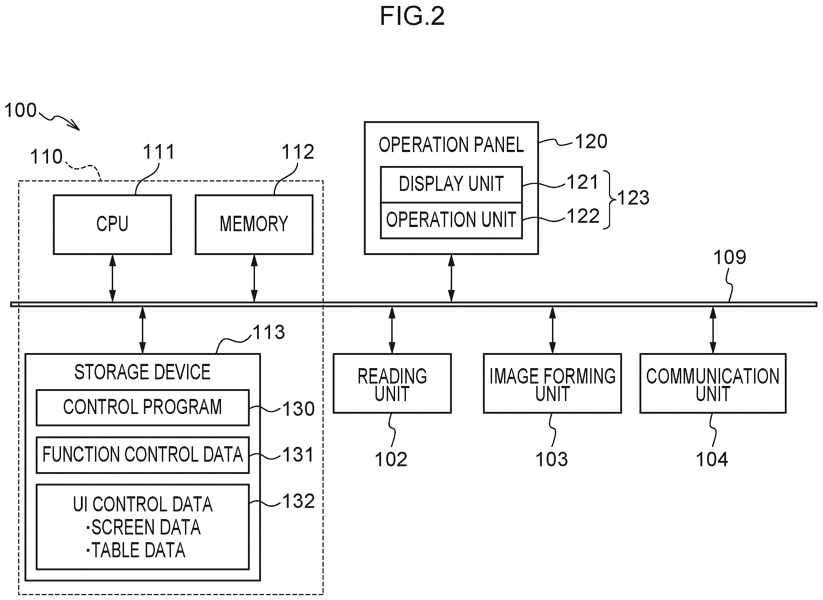

Fig. 1 is a view illustrating an appearance of the multi-function peripheral 100 according to the present embodiment. Fig. 2 is a block diagram illustrating a hardware configuration of the multi-function peripheral 100.

The multi-function peripheral 100 illustrated in Figs. 1 and 2 is a device capable of executing processing for functions such as copying, printing, scanning, and facsimile. As illustrated in Fig. 2, the multi-function peripheral 100 includes a control device 110, a reading unit 102, an image forming unit 103, and a communication unit 104 in a main body 150. Note that the multi-function peripheral 100 is an example of the information apparatus. The multi-function peripheral 100 can perform data communication with an information processing apparatus such as a personal computer or a server in an office connected to a local area network (LAN) line or the like or perform facsimile communication with a communication apparatus in another office through a public line such as a telephone line. Therefore, the multi-function peripheral 100 is also an example of the information communication apparatus.

An operation panel 120, the control device 110 including a storage device 113, the reading unit 102, the image forming unit 103, and the communication unit 104 are mutually connected by a bus 109. Each unit of the multi-function peripheral 100 will be described below.

### (Reading Unit 102, Image Forming Unit 103, and Communication Unit 104)

The reading unit 102 reads an image of a document. Specifically, the reading unit 102 generates image data by optically reading an image of a document and converting the image into a digital signal.

The image forming unit 103 forms an image on a medium such as a paper sheet. Specifically, the image forming unit 103 forms an image on a medium by, for example, an electrophotographic method in which an image is formed by electrostatically attaching a toner onto a paper sheet. Note that the image forming unit 103 may form an image on a medium by another method such as an inkjet method in which an image is formed by ejecting an ink onto a paper sheet.

The communication unit 104 communicates with an external device such as another facsimile device. Specifically, the communication unit 104 transmits and receives various pieces of data to and from an external device by communication using various wired or wireless communication lines. Examples of the communication line include the Internet, an intranet, and a public telephone line.

For example, the multi-function peripheral 100 includes a document feeding device 151 provided at an upper portion of the main body 150 as illustrated in Fig. 1. The document feeding device 151 feeds a document to a document reading stage (not illustrated) disposed on an upper surface of the main body 150. The reading unit 102 is disposed at a position facing the reading stage in the main body 150. The document feeding device 151 can be lifted up. As the document feeding device 151 is lifted up, the reading stage is exposed and can be used as a so-called flatbed type. Therefore, a user can directly set a document on the reading stage without using the document feeding device 151.

An image of a document is read by the reading unit 102, and image data is generated. In a case where processing related to the copy function is executed in the multi-function peripheral 100, the image forming unit 103 prints an image of a document on another paper sheet based on image data generated by the reading unit 102. The paper sheet on which an image is printed is discharged to a paper sheet discharging unit 152 provided in the main body 150. In a case where processing related to the facsimile function is executed in the multi-function peripheral 100, image data generated by the reading unit 102 is output to the communication unit 104 and transmitted to a destination via the communication unit 104. In a case where processing related to the printing function is executed in the multi-function peripheral 100, the image forming unit 103 prints an image on a paper sheet based on image data input from a personal computer or the like. The paper sheet on which an image is printed is discharged to the paper sheet discharging unit 152.

In addition, a feeding unit in which a paper sheet is loaded, a paper sheet transport mechanism that transports a paper sheet to the image forming unit 103 and the paper sheet discharging unit 152, and the like are provided inside the main body 150.

### (Operation Panel 120)

The multi-function peripheral 100 includes the operation panel 120 for a user to operate the multi-function peripheral 100. The operation panel 120 is an example of a user interface. The user interface is a device for exchanging information between the multi-function peripheral 100 and a user, specifically, for inputting an operation instruction from a user to the multi-function peripheral 100 or displaying information such as a status of the multi-function peripheral 100 to a user.

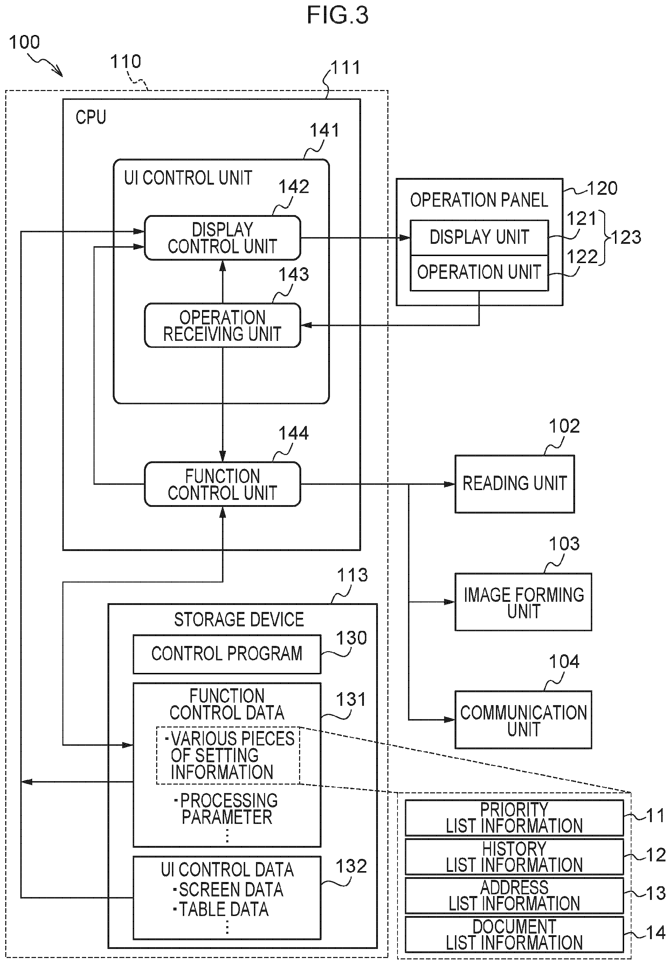

In the present embodiment, specifically, the operation panel 120 includes a display unit 121 and an operation unit 122 as illustrated in Figs. 2 and 3.

The display unit 121 displays an operation screen, various messages such as operation guidance, and the like. The operation unit 122 is a component on which a user performs an input operation. The display unit 121 is implemented by, for example, a liquid crystal display, an organic electro luminescence (EL) display, or the like. The operation unit 122 and the display unit 121 are implemented by a touch panel display 123 in which both the operation unit 122 and the display unit 121 are integrated. The operation unit 122 is a resistive type touch panel, a capacitive type touch panel, or the like, and detects a touch operation of a user. A region where an operation screen of the display unit 121 is displayed and a region where a touch operation of the operation unit 122 can be detected overlap with each other in the touch panel display 123. As a result, once a user performs a touch operation on an operation screen displayed on the display unit 121, the operation unit 122 detects the touch operation performed on the operation screen and a position at which the touch operation is performed on the operation screen, and outputs a detection signal to the control device 110.

Examples of the touch operation of the user include operations such as tapping, flicking, sliding, and dragging. The tapping operation is an operation of touching the screen of the display unit 121 with a finger. The flicking operation is an operation of touching the screen of the display unit 121 in such a way as to flick the screen with a finger. The sliding operation is an operation of moving a finger in a state of touching the screen of the display unit 121 with the finger. The dragging operation is an operation for moving an image such as an icon displayed on the display unit 121. The dragging operation is an operation of touching an image displayed on the display unit 121 with a finger, then moving the finger touching the image, and then releasing the finger from the image. The operation unit 122 that is a touch panel outputs, as a detection signal, a movement locus of a finger associated with these touch operations in an operation screen. Note that the touch operation may be not only an operation using a finger of a user but also an operation using a tool such as a touch pen.

The operation panel 120 further includes an operation key 124 disposed outside the screen of the display unit 121 as illustrated in Fig. 1. Examples of the operation key 124 include a power key for supplying power to the multi-function peripheral 100, a cancel key for canceling various executions, and the like. As described above, the operation panel 120 according to the present embodiment includes a mechanical operation unit in addition to the touch panel display 123 including the operation unit 122.

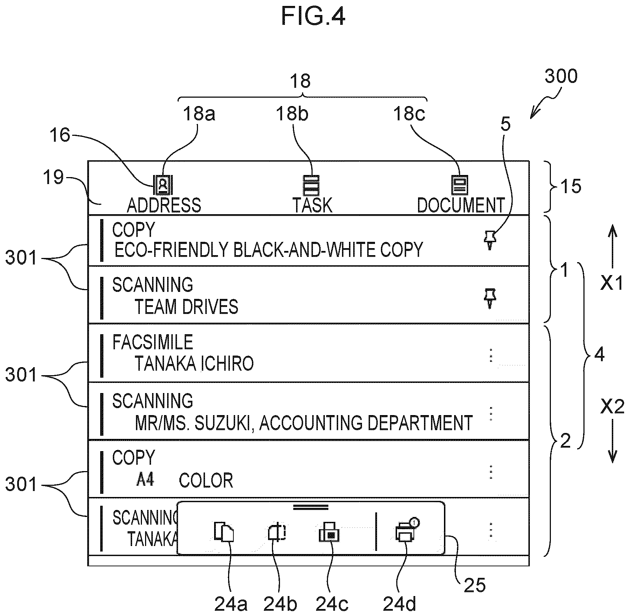

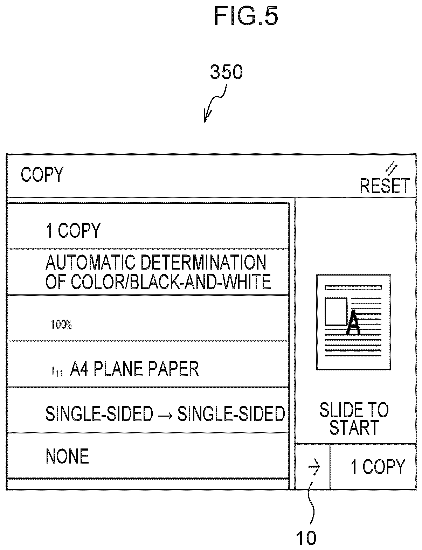

In the present embodiment, the display unit 121 can display various operation screens such as an item selection screen 300 illustrated in Fig. 4 and an execution screen 350 illustrated in Fig. 5, for example. Details of the item selection screen 300 and the execution screen 350 will be described later.

### (Control Device 110)

The control device 110 is a device that controls each unit of the multi-function peripheral 100 including the operation panel 120. Specifically, the control device 110 includes a central processing unit (CPU) 111, a memory 112, and a storage device 113 as illustrated in Fig. 2. The control device 110 controls the multi-function peripheral 100 based on information stored in the storage device 113.

The storage device 113 stores various programs including a control program 130 and various pieces of data including function control data 131 and user interface (UI) control data 132. The control program 130 is a program that causes a computer including the CPU 111 to function as the control device 110. The function control data 131 is data used to control the reading unit 102, the image forming unit 103, and the communication unit 104, and includes various pieces of setting information, processing parameters, and the like. The processing parameter is, for example, a parameter used when image correction processing such as gain correction, contrast correction, white balance correction, or gamma correction is executed.

The various pieces of setting information include setting information that specifies processing conditions for each of the copy function, the scanning function, the printing function, and the like implemented by the reading unit 102, the image forming unit 103, and the communication unit 104. For example, in the case of the copy function and the printing function, the setting information is setting information that specifies processing conditions such as paper sheet size setting and color setting (for example, black-and-white copy or color copy), and in the case of the scanning function, the setting information is setting information that specifies processing conditions such as reading resolution setting and color setting (for example, black-and-white reading or color reading). The setting information includes user setting information set by a user in addition to initial setting information. The various pieces of setting information also include a history of user setting information used by a user in the past.

The UI control data 132 includes various pieces of screen data for configuring an operation screen displayed by the display unit 121 and various pieces of table data defining various setting items and the like displayed in an operation screen. Specifically, the storage device 113 is implemented by a recording device such as a hard disk drive (HDD), a solid state drive (SSD), or a flash memory.

The memory 112 is a work area for the CPU 111 to execute various programs, and temporarily records various programs or various pieces of data when the CPU 111 executes processing. The CPU 111 reads various programs including the control program 130 from the storage device 113 to the memory 112, and executes the program by using the memory 112 as a work area.

In the control device 110, the CPU 111 executes the control program 130 to implement various functions for controlling the multi-function peripheral 100. Hereinafter, a functional configuration implemented by cooperation of the CPU 111 as a hardware resource and the control program 130 as a software resource will be described. Fig. 3 is a block diagram illustrating a functional configuration of the CPU 111, and is a block diagram mainly illustrating a functional configuration that implements control of the operation panel 120.

As illustrated in Fig. 3, in the control device 110, the CPU 111 functions as a UI control unit 141 and a function control unit 144 by executing the control program 130.

The function control unit 144 controls the reading unit 102, the image forming unit 103, and the communication unit 104 while referring to the function control data based on an operation instruction input from the UI control unit 141. In addition, the function control unit 144 outputs, to the UI control unit 141, a processing execution result in the reading unit 102, the image forming unit 103, and the communication unit 104, a status, and the like.

The UI control unit 141 receives an operation instruction input from the operation panel 120 and outputs the received operation instruction to the function control unit 144. The UI control unit 141 controls the touch panel display 123. The UI control unit 141 includes a display control unit 142 and an operation receiving unit 143 as the functional configuration.

The operation receiving unit 143 receives an operation instruction according to a user's operation input from the operation panel 120, the user's operation input including a user's touch operation detected by the operation unit 122 of the touch panel display 123.

The display control unit 142 performs control to display various operation screens on the display unit 121 of the touch panel display 123 with reference to the function control data 131 and the UI control data 132.

Specifically, once the operation receiving unit 143 receives an operation of supplying power to the multi-function peripheral 100, the display control unit 142 causes the display unit 121 to display the item selection screen 300 (see Fig. 4) as a top screen, as an example. The item selection screen 300 is a screen in which the item list 4 including a plurality of task items 301 (see Fig. 4) selected by a user is displayed in a scrollable manner. A user selects and operates a task item 301 to be executed by the multi-function peripheral 100 in the item selection screen 300. Here, a task is processing executed by the multi-function peripheral 100 after a user sets a processing condition for a main function of the multi-function peripheral 100. Then, an item including information indicating the content of this processing is referred to as the task item 301. For example, in the case of the copy function, which is one of the main functions of the multi-function peripheral 100, processing executed by the multi-function peripheral 100 after a user sets the processing conditions such as paper sheet size setting and color setting is the task of the copy function, and an item indicating the content of the task is the task item 301. Similarly, in the case of the scanning function, processing executed by the multi-function peripheral 100 after a user sets the processing conditions such as reading resolution setting and color setting is the task of the scanning function, and an item indicating the content of the task is the task item 301. The task item 301 is an example of an item.

As described above, there are various types of tasks and task items 301 indicating the contents of the tasks according to the type of function and the processing condition. A plurality of task items 301 for different types of functions and different processing conditions are displayed in the item selection screen 300. The item selection screen 300 is a selection screen for selecting one task item 301 from the plurality of task items 301 in the case of causing the multi-function peripheral 100 to execute one task.

Various pieces of setting information of the function control data 131 include priority list information 11 and history list information 12. The storage device 113 is a priority list recording unit in which the priority list information 11 is recorded and a history list recording unit in which the history list information 12 is recorded. The priority list information 11 is information in which a plurality of preset task items 301 are recorded. The task items 301 included in the priority list information 11 include, for example, task items that are preset due to a high execution frequency. The task items 301 included in the priority list information 11 may be initially set at the time of product shipment or may be set by a user.

The history list information 12 is information in which histories of the task items 301 executed in the past by the multi-function peripheral 100 are recorded. The name of each task item 301, an arrangement order, and the like are recorded in the priority list information 11. The name of each task item 301, an execution date and time when each task item 301 was executed, and the like are recorded in the history list information 12.

The display control unit 142 generates a priority list 1 (see Fig. 4) and a history list 2 (see Fig. 4) with reference to the priority list information 11 and the history list information 12. Specifically, when generating the priority list 1, the display control unit 142 generates the priority list 1 by arranging the task items 301 of the priority list 1 in order based on the name and the arrangement order of each task item 301 included in the priority list information 11. When generating the history list 2, the display control unit 142 generates the history list 2 by arranging the task items 301 of the history list 2 in order based on the name and the execution date and time of each task item 301 included in the history list information 12. The display control unit 142 displays the priority list 1 and the history list 2 in parallel as the item list 4 in the item selection screen 300.

As a result, as illustrated in Fig. 4, the display control unit 142 displays the priority list 1 that is a list of preset task items 301, and the history list 2 that includes histories of task items 301 executed in the past in the multi-function peripheral 100, in parallel in the item selection screen 300. In Fig. 4, as an example, the priority list 1 is displayed above the history list 2 in the item selection screen 300.

The task items 301 of the history list 2 are displayed in time series based on the execution date and time of each task item 301 recorded in the history list information 12. Specifically, as an example, the task items 301 are displayed in a direction along an arrow X2 in order from a task item 301 with the latest execution date and time. Therefore, the most recently executed task item 301 is displayed at the uppermost portion of the history list 2 (that is, a position closest to an X1 direction side).

As described above, each of the plurality of task items 301 included in the priority list 1 or the history list 2 is a task item for any of the four main functions of the multi-function peripheral 100, that is, the copy function, the scanning function, the printing function, and the facsimile function. In this manner, the task item 301 registered in the priority list 1 or the history list 2 corresponds to any of the four main functions of the multi-function peripheral 100. In other words, supplementary functions of the multi-function peripheral 100 other than the main four functions are excluded from the functions registered in the priority list 1 or the history list 2. Therefore, since the task items 301 registered in the priority list 1 and the history list 2 are narrowed down to those related to main functions having a relatively high execution frequency, the priority list 1 and the history list 2 become easy to use for a user. At least one of the plurality of task items 301 registered in the priority list 1 or the history list 2 preferably includes a task item 301 for the copy function considered to have a relatively high execution frequency among the four main functions.

The task item 301 of the priority list 1 can be customized by a user. Specifically, rearrangement of the task items 301 in the priority list 1, name change, and addition of a task item 301 from the history list 2 can be made.

The function control unit 144 adds data of an executed task item 301 to the history list information 12 every time a task item 301 is executed by the multi-function peripheral 100. In a case where the history list information 12 is updated, the display control unit 142 updates the history list 2 in the item selection screen 300.

A pinning mark 5 indicating that it is a task item 301 of the priority list 1 is displayed on the right side of a task item 301 of the priority list 1. The pinning mark 5 indicates it is a task item 301 whose display is not updated even when another task item is executed.

For example, once the operation unit 122 detects a selection operation (specifically, a flicking operation or a tapping operation) for a task item 301 in the priority list 1 and the history list 2, the operation receiving unit 143 receives an operation instruction for the selection operation for the task item 301. In a case where the operation receiving unit 143 receives the operation instruction, the display control unit 142 causes the display unit 121 to display the execution screen 350 (see Fig. 5) for executing the selected task. Setting items for performing various settings and an execution button 10 for executing a task are displayed in the execution screen 350. Various settings are made by operating the setting items, and then a task is executed by operating the execution button 10. The execution screen 350 illustrated in Fig. 5 is an example of a screen in a case where a task for the copy function of "A4 color" is selected as the task item 301.

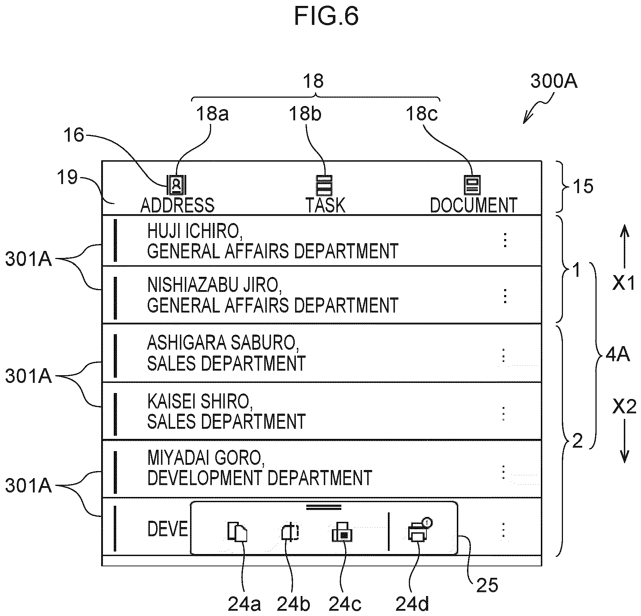

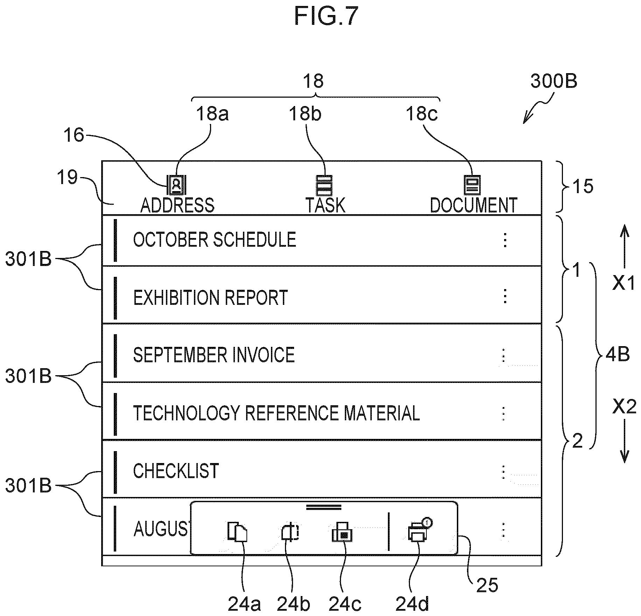

As illustrated in Fig. 5, a list selection button 18 is displayed in the item selection screen 300 according to the present embodiment in addition to the item list 4. A display region 15 of the list selection button 18 is arranged on the upper end side of the item list 4 in the item selection screen 300. Specifically, the display region 15 is arranged above the priority list 1. The list selection button 18 is a button for selecting one item list 4 to be displayed in the item selection screen 300 from a plurality of types of item lists 4. There are a plurality of types of item lists 4, and the priority list 1 and the history list 2 illustrated in Fig. 4 are examples of the item list 4. Examples of the plurality of types of item lists 4 include three types of item lists 4 including the priority list 1 and the history list 2 illustrated in Fig. 4, an address list 4A illustrated in Fig. 6, and a document list 4B illustrated in Fig. 7. In other words, the list selection button 18 is a button for switching an item list 4 displayed in the item selection screen 300. The upper end side of the item list 4 is an example of an end side of the item list 4 in a scrolling direction.

The display control unit 142 displays, as the list selection buttons 18, a selection button 18a for the address list, a selection button 18b for the priority list 1 and the history list 2, and a selection button 18c for the document list in the item selection screen 300 together with the item list 4 with reference to the UI control data 132. As a result, the selection buttons 18a, 18b, and 18c are displayed on the upper end side of the item list 4 (specifically, the priority list 1). The dimensions of the display region 15 in the vertical direction and the horizontal direction are equivalent to the dimensions of a task item 301 in the vertical direction and the horizontal direction. The task items 301 have the same dimensions in the vertical direction and the horizontal direction. Each of the selection buttons 18a, 18b, and 18c includes an icon 16 and an explanatory text 19 indicating a content of a selectable list.

Here, in Fig. 3, the various pieces of setting information of the function control data 131 include address list information 13 and document list information 14 in addition to the priority list information 11 and the history list information 12. As described above, the priority list 1 and the history list 2 are item lists generated based on the priority list information 11 and the history list information 12.

The address list information 13 is list information of addresses used for the facsimile function or the like, and is information in which a plurality of addresses registered by a user are recorded. The address list 4A illustrated in Fig. 6 is an item list 4 generated based on the address list information 13. A plurality of items 301A indicating a plurality of addresses are displayed in a list form in the address list 4A. The item 301A is an item selected by a user from the address list 4A, similarly to the task items 301 in the priority list information 11 and the history list information 12.

The document list information 14 is, for example, information in which document data including a document and an image read by the scanning function is recorded. The document list 4B illustrated in Fig. 7 is an item list 4 generated based on the document information 14. A plurality of items 301B indicating a plurality of documents are displayed in a list form in the document list 4B. The item 301B is an item selected by a user from the document list 4A, similarly to the task items 301 in the priority list information 11 and the history list information 12.

As described above, the pieces of information for generating the plurality of types of item lists 4 are recorded in the storage device 113 as the various pieces of setting information included in the model control data 131 as illustrated in Fig. 3.

For example, once the operation unit 122 detects an operation (specifically, a flicking operation or a tapping operation) for any of the selection button 18a, 18b, and 18c, the operation receiving unit 143 receives an operation instruction for the operation.

For example, it is assumed that an item list 4 (for example, the priority list 1 and the history list 2) other than the address list 4A is displayed as the item list 4 in the item selection screen 300. In a case where the operation receiving unit 143 receives an operation instruction for the selection button 18a in this state, the display control unit 142 generates the address list 4A illustrated in Fig. 6 with reference to the address list information 13 based on the operation instruction. The display control unit 142 displays the address list 4A as the item list 4 instead of the priority list 1 and the history list 2 which are the item list 4 displayed in the item selection screen 300. In a case where the address list 4Ais already displayed as the item list 4 in the item selection screen 300, and the selection button 18a is operated, the display of the address list 4A is maintained.

For example, it is assumed that an item list 4 (for example, the address list 4A) other than the document list 4B is displayed as the item list 4 in the item selection screen 300. In a case where the operation receiving unit 143 receives an operation instruction for the selection button 18c in this state, the display control unit 142 generates the document list 4B illustrated in Fig. 7 with reference to the document list information 14 based on the operation instruction. The document list 4B is displayed as the item list 4 instead of the address list 4A which is the item list 4 displayed in the item selection screen 300. In a case where the document list 4B is already displayed as the item list 4 in the item selection screen 300, and the selection button 18c is operated, the display of the document list 4B is maintained.

For example, it is assumed that an item list 4 (for example, the address list 4A) other than the priority list 1 and the history list 2 is displayed as the item list 4 in the item selection screen 300. In a case where the operation receiving unit 143 receives an operation instruction for the selection button 18b in this state, the display control unit 142 displays the priority list 1 and the history list 2 as the item list 4 instead of the address list 4A which is the item list 4 displayed in the item selection screen 300 based on the operation instruction. In a case where the priority list 1 and the history list 2 are already displayed as the item list 4 in the item selection screen 300, and the selection button 18b is operated, the display of the priority list 1 and the history list 2 is maintained.

A display region 25 in which the function selection button 24 is displayed is further arranged at the lower end of the item list 4 in the item selection screen 300 according to the present embodiment. In the example illustrated in Fig. 4, the display region 25 is arranged while being superimposed on a task item 301 at the lower end of the history list 2. The function selection button 24 is a button for a user to select a function to be executed by the multi-function peripheral 100. The function selection button 24 is used, for example, in a case where a user selects a function that a user desires to cause the multi-function peripheral 100 to execute when a desired task that the user desires to cause the multi-function peripheral 100 to execute is not included in the priority list 1 and the history list 2. The lower end side of the item list 4 is an example of an end side of the item list 4 in the scrolling direction.

The display control unit 142 displays, as the function selection buttons 24, a selection button 24a for selecting the copy function, a selection button 24b for selecting the scanning function, a selection button 24c for selecting the printing function, and a selection button 24d for selecting the facsimile function in the item selection screen 300 together with the item list 4, with reference to the UI control data 132. As a result, the selection buttons 24a, 24b, 24c, and 24d are displayed while being superimposed on the lower end of the item list 4 (the history list 2 in the example illustrated in Fig. 4). As described above, in the present embodiment, each of the copy function, the scanning function, the printing function, and the facsimile function, which are four main functions of the multi-function peripheral 100, can be executed by the function selection button 24. The dimension of the display region 25 in the vertical direction is equivalent to the dimension of a task item 301 in the vertical direction, and the dimension of the display region 25 in the horizontal direction is smaller than the dimension of a task item 301 in the horizontal direction.

Unlike the list selection button 18, each of the selection buttons 24a, 24b, 24c, and 24d does not include the explanatory text 19 and only includes an icon. For example, once the operation unit 122 detects an operation (specifically, a flicking operation or a tapping operation) for any of the selection button 24a, 24b, 24c, and 24d, the operation receiving unit 143 receives an operation instruction for the operation.

In a case where the operation receiving unit 143 receives the operation instruction, the display control unit 142 causes the display unit 121 to display the execution screen 350 (see Fig. 5 as an example) for executing the selected function. Setting items for performing various settings and the execution button 10 for executing a function are displayed in the execution screen 350. Various settings are made by operating the setting items, and then the function is executed by operating the execution button 10.

As described above, in the item selection screen 300, the item list 4, the list selection button 18, and the function selection button 24 are displayed in the same item selection screen 300. Fig. 4 illustrates an example in which the priority list 1 and the history list 2 are displayed in the item selection screen 300 as the item list 4.

Once the operation unit 122 detects a scrolling operation for the item list 4 in the item selection screen 300, the operation receiving unit 143 receives an operation instruction for the scrolling operation. This operation instruction is input to the display control unit 142. The display control unit 142 scrolls through the item list 4 based on the input operation instruction for the scrolling operation. Specifically, the scrolling operation is a flicking operation in a direction along an arrow X1 or a direction along an arrow X2 (see Fig. 4).

In the present embodiment, in a case where the priority list 1 and the history list 2 are displayed in the item selection screen 300 as the item list 4, the display control unit 142 integrally handles the priority list 1 and the history list 2 as an integrated list. In other words, at the time of scrolling, the priority list 1 and the history list 2 are integrally scrolled as one integrated list without being distinguished from each other.

The scrolling operation can be performed only in the X1 direction in which the number of displayed task items 301 of the priority list 1 decreases in the state illustrated in Fig. 4 in the item selection screen 300. Therefore, only a flicking operation in the X1 direction is valid in the state illustrated in Fig. 4 in the item selection screen 300. The priority list 1 and the history list 2 can also be scrolled in the X2 direction after being scrolled in the X1 direction.

The scrolling operation for the priority list 1 and the history list 2 is performed by moving the priority list 1 and the history list 2 in the X1 direction or the X2 direction for which the flicking operation has been performed. As a result, task items 301 that have not been displayed are sequentially displayed in the item selection screen 300.

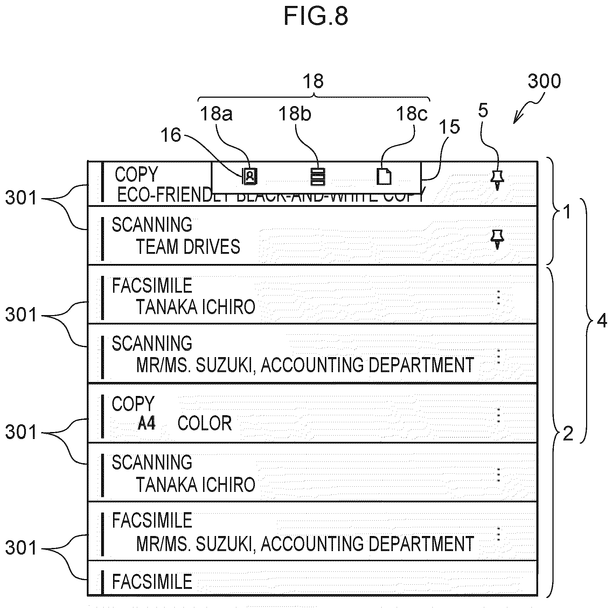

Once the operation receiving unit 143 receives an operation instruction for a scrolling operation for the item list 4, the display control unit 142 reduces the size of the display region 15 in which the list selection button 18 is displayed and hides the function selection button 24 in the item selection screen 300 as illustrated in Fig. 8. The size reduction of the display region 15 and hiding of the function selection button 24 are performed regardless of the scrolling direction of the scrolling operation received by the operation receiving unit 143. Specifically, the dimension of the display region 15 in the vertical direction and the dimension of the display region 15 in the horizontal direction are reduced to 1/3. That is, the display region 15 is reduced in size in the scrolling direction (vertical direction) and a direction orthogonal to the scrolling direction (horizontal direction). At this time, the explanatory text 19 is hidden, and only the icon 16 is displayed in the list selection button 18. The display region 15 reduced in size is superimposed on the task item 301 arranged at the uppermost portion of the item list 4. Therefore, the list selection button 18 displayed in the display region 15 is displayed while being superimposed on the task item 301 arranged at the uppermost portion of the item selection screen 300. As the display region 15 reduced in size is superimposed on the task item 301 arranged at the uppermost portion of the item selection screen 300, the priority list 1 is displayed up to the upper end of the item selection screen 300. In the present embodiment, the display region 25 in which the function selection button 24 is displayed is removed, and the function selection button 24 is hidden. As a result, the entire task item 301 arranged at the lowermost portion of the item selection screen 300 is displayed.

In a case where the scrolling of the item list 4 is stopped, that is, in a case where the operation unit 122 does not detect a scrolling operation for the item list 4, the display control unit 142 returns the display region 15 reduced in size to the original display state after redisplaying the hidden function selection button 24. Specifically, the display control unit 142 redisplays the hidden function selection button 24, and then returns the display region 15 reduced in size to the original display state after a predetermined time elapses since the scrolling of the item list 4 is stopped. At this time, the display region 25 including the function selection button 24 and the display region 15 including the list selection button 18 return to the original display state. The lapse of the predetermined time is measured by, for example, a timer or the like.

### (Operation of Present Embodiment)

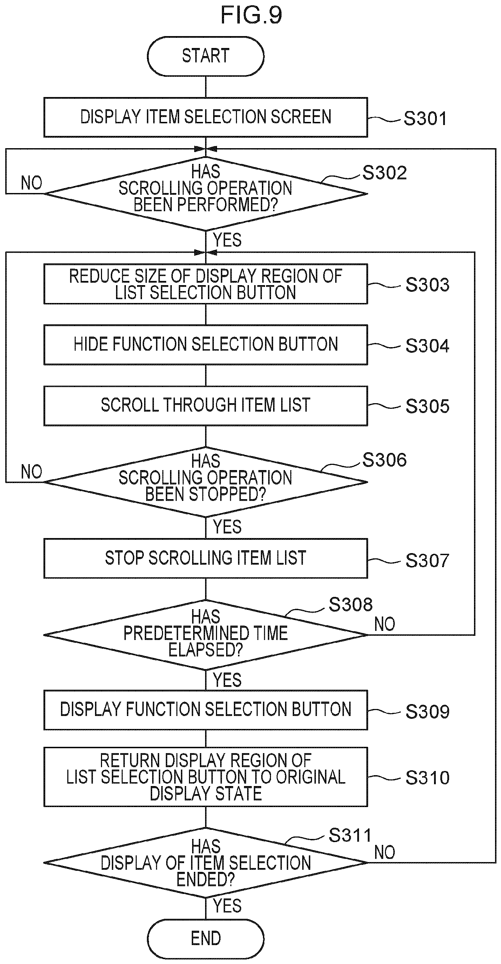

Next, an example of the operation according to the present embodiment will be described. Fig. 9 is a flowchart illustrating a flow of display control processing executed by the control device 110.

Once the multi-function peripheral 100 is activated by receiving power, the CPU 111 executes the control program 130 read from the storage device 113. As a result, the CPU 111 functions as the UI control unit 141 and the function control unit 144, and starts the control processing.

As illustrated in Fig. 9, as an example, the UI control unit 141 causes the display unit 121 of the touch panel display 123 to display the item selection screen 300 (see Fig. 4) as the top screen (Step S301). In this example, a case where the item list 4 displayed in the item selection screen 300 is the priority list 1 and the history list 2 illustrated in Fig. 4 will be described as an example. Specifically, the UI control unit 141 reads the priority list information 11 and the history list information 12 included in the function control data 131, and the UI control data 132, generates the priority list 1 and the history list 2 including a plurality of task items 301, and displays the priority list 1 and the history list 2 in parallel as the item list 4 in the item selection screen 300. The UI control unit 141 displays the selection buttons 18a, 18b, and 18c in the display region 15 with reference to the UI control data 132. The UI control unit 141 displays the selection buttons 24a, 24b, 24c, and 24d in the display region 25 with reference to the UI control data 132.

The UI control unit 141 waits for input of a touch operation for the item selection screen 300 displayed on the display unit 121. First, in Step S302, the UI control unit 141 determines whether or not a scrolling operation for the item list 4 (for example, the priority list 1 and the history list 2) displayed in the item selection screen 300 has been performed. In a case where a task item 301 desired by a user is hidden in the item selection screen 300, the user performs a scrolling operation for the item list 4 of the task selection screen 300 through the touch panel display 123 in order to display the hidden task item 301. The scrolling operation is, for example, a flicking operation in the direction along the arrow XI.

In a case where the scrolling operation for the item list 4 of the item selection screen 300 has been performed (Step S302: YES), the UI control unit 141 proceeds to Step S303. In a case where the scrolling operation for the item list 4 is not performed (Step S302: NO), Step S302 is repeated until the scrolling operation for the item list 4 is performed.

In Step S303, the UI control unit 141 reduces the size of the display region 15 in which the list selection button 18 is displayed. Specifically, the dimension of the display region 15 in the vertical direction and the dimension of the display region 15 in the horizontal direction are reduced to 1/3. At this time, the explanatory text 19 is hidden, and only the icon 16 is displayed in the list selection button 18. The display region 15 reduced in size is superimposed on the task item 301 arranged at the uppermost portion of the item selection screen 300. Therefore, the list selection button 18 displayed in the display region 15 is displayed while being superimposed on the task item 301 arranged at the uppermost portion of the item selection screen 300. As the display region 15 reduced in size is superimposed on the task item 301 arranged at the uppermost portion of the item selection screen 300, the priority list 1 is displayed up to the upper end of the item selection screen 300.

The UI control unit 141 hides the function selection button 24 (Step S304). As a result, the entire task item 301 arranged at the lowermost portion of the item selection screen 300 is displayed. In the present embodiment, Step S304 is executed after Step S303, but Step S303 may be executed after Step S304 or may be executed simultaneously with Step S304.

The UI control unit 141 scrolls through the priority list 1 and the history list 2 as the item list 4 (Step S305). Specifically, in Step S305, the UI control unit 141 handles the priority list 1 and the history list 2 as one integrated list, and integrally scrolls through the priority list 1 and the history list 2. For example, when a user performs the scrolling operation, both the priority list 1 and the history list 2 are scrolled regardless of whether the finger of the user touches a display region of the priority list 1 or a display region of the history list 2 on the touch panel display 123, because the priority list 1 and the history list 2 are handled as one integrated list. A user searches for a desired task item 301 in the item selection screen 300 by performing such a scrolling operation.

Next, the UI control unit 141 determines whether or not the scrolling operation for the item list 4 has been stopped (Step S306). In a case where the scrolling operation for the item list 4 has been stopped (Step S306: YES), the UI control unit 141 stops scrolling the priority list 1 and the history list 2 as the item list 4 (Step S307), and proceeds to Step 308. In a case where the scrolling operation for the item list 4 has not been stopped (Step S306: NO), the UI control unit 141 proceeds to Step 303.

In Step S308, it is determined whether or not a predetermined time has elapsed since the stopping of the scrolling operation for the item list 4. In a case where the predetermined time has elapsed since the stopping of the scrolling operation for the item list 4 (Step S308: YES), the UI control unit 141 displays the function selection button 24 (Step S309). That is, the UI control unit 141 arranges the display region 25 in which the function selection button 24 is displayed again in such a manner that the display region 25 is superimposed on the task item 301 positioned at the lower end of the item list 4. In this manner, the UI control unit 141 stops hiding the function selection button 24 and returns the display region 25 including the function selection button 24 to the original display state.

Next, the UI control unit 141 returns the display region 15 reduced in size to the original display state (Step S310). As described above, in the present embodiment, after the hidden function selection button 24 is redisplayed, the display region 15 reduced in size returns to the original display state. In a case where the scrolling operation for the item list 4 has been performed before the predetermined time elapses since the stopping of the scrolling operation for the item list 4 (Step S308: NO), the UI control unit 141 proceeds to Step 303.

In Step S311, the UI control unit 141 determines whether or not the display of the item selection screen 300 has ended. For example, it is determined whether or not the item selection screen 300 has been switched to another screen. The UI control unit 141 repeats the processing from Steps S301 to S310 until the display of the item selection screen 300 ends (Step S311: NO).

In the control processing illustrated in Fig. 9, in a case where an operation (specifically, a flicking operation or a tapping operation) for the selection button 18a has been performed, the UI control unit 141 displays the address list 4A (see Fig. 6) used for the facsimile function or the like as the item list 4 regardless of which step is being executed. In the control processing illustrated in Fig. 9, in a case where an operation (specifically, a flicking operation or a tapping operation) for the selection button 18c has been performed, the UI control unit 141 displays the document list 4B (see Fig. 7) such as data of documents and images read by the scanning function as the item list 4 regardless of which step is being executed. In a case where the type of the item list 4 displayed in the item selection screen 300 is switched, the UI control unit 4 monitors an operation for the item list 4 being displayed and executes the control processing illustrated in Fig. 9.

The control processing illustrated in Fig. 9 ends, for example, in a case where the power supply of the multi-function peripheral 100 is turned off, regardless of which step is being executed.

### (Operation and Effect of Present Embodiment)

As described above, in the present embodiment, as illustrated in Figs. 8 and 9, in a case where the scrolling operation for the item list 4 of the item selection screen 300 has been performed (Step S302: YES), the UI control unit 141 reduces the size of the display region 15 in which the list selection button 18 is displayed (Step S303), and hides the function selection button 24 (Step S304).

As described above, in a case where the scrolling operation for the item list 4 has been performed, the size of the display region 15 in which the list selection button 18 is displayed is reduced. Therefore, even in a case where the scrolling operation for the item list 4 has been performed, the display region of the item list 4 is expanded as compared with a configuration in which the display state of the display region 15 is maintained.

Since the size of the display region 15 is reduced in a case where the scrolling operation for the item list 4 has been performed, an operation for the list selection button 18 can be performed even in a case where the scrolling operation for the item list 4 has been performed, unlike a configuration in which the display region 15 is removed. Therefore, in the present embodiment, when performing the scrolling operation for the item list 4, the display region of the item list 4 can be expanded while maintaining a state in which the operation for the list selection button 18 can be performed. As the display region of the item list 4 is expanded, the number of task items 301 displayed in the item selection screen 300 is increased, as a result of which it is possible to quickly select a task item 301.

In the present embodiment, the list selection button 18 is a button for selecting one item list 4 to be displayed in the item selection screen 300 from a plurality of types of recorded item lists 4 (specifically, three types including the priority list 1 and the history list 2, the address list, and the document list). Therefore, when scrolling through the item list 4, the item list 4 displayed in the item selection screen 300 can be switched among three types including the priority list 1 and the history list 2, the address list 4B, and the document list 4C.

In the present embodiment, the display region 15 reduced in size is superimposed on the task item 301 arranged at the uppermost portion of the item list 4. Therefore, the priority list 1 is displayed up to the upper end of the item selection screen 300. Therefore, the display region of the item list 4 can be expanded. As the display region of the item list 4 is expanded, the number of items (the task item 301 illustrated in Fig. 4, the item 301A illustrated in Fig. 6, the item 301B illustrated in Fig. 7, and the like) displayed in the item selection screen 300 is increased, it is possible to quickly select an item or the like.

In the present embodiment, the list selection button 18 is displayed on the upper end side of the item list 4 (specifically, the priority list 1), and the function selection button 24 is displayed while being superimposed on the lower end of the item list 4 (specifically, the history list 2).

In this manner, the list selection button 18 and the function selection button 24 are distributed and arranged on the upper and lower ends of the item list 4, and thus, the item list 4 is arranged on the center side of the item selection screen 300 in the scrolling direction. Therefore, the scrolling operation for the item list 4 can be easily performed. Since the list selection button 18 and the function selection button 24 are distributed and arranged on the upper and lower sides of the item list 4, the size of the display region 15 of the list selection button 18 is reduced, and when the function selection button 24 is hidden, the display region of the item list 4 is expanded in the vertical direction.

In the present embodiment, in a case where the scrolling operation for the item list 4 of the item selection screen 300 has been performed (Step S302: YES), the UI control unit 141 hides the function selection button 24 (Step S304) in addition to reducing the size of the display region 15 (Step S303).

In this way, the function selection button 24 is hidden, and thus, the display region is expanded on the lower end side of the item list 4, unlike the configuration in which the size of the display region 25 including the function selection button 24 is reduced. As the display region of the item list 4 is expanded, the number of items (the task item 301, the item 301A, the item 301B, and the like) displayed in the item selection screen 300 is increased, as a result of which it is possible to quickly select an item. In the present embodiment, the scrolling operation for the item list 4 is regarded as an operation for searching for an item (the task item 301, the item 301A, the item 301B, and the like) to be selected by a user, and thus, it is assumed that a possibility that the user selects the function selection button 24 is low. Therefore, the function selection button 24 is hidden.

In a case where a predetermined time has elapsed since the stopping of the scrolling operation for the item list 4 (Step S308: YES), the UI control unit 141 returns the display region 15 reduced in size to the original display state (Step S310) after redisplaying the hidden function selection button 24 (Step S309).

As described above, since the display region 15 reduced in size returns to the original display state after the hidden function selection button 24 is displayed, the operation for the function selection button 24 can be more quickly performed after the scrolling operation for the item list 4 is stopped, as compared with the configuration in which the display region 15 including the list selection button 18 returns to the original display state first.

In the present embodiment, although the size of the display region 15 is reduced, the display itself of the list selection button 18 is maintained, and the list selection button 18 can thus be operated, but the function selection button 24 is hidden. Therefore, as the function selection button 24 is displayed before returning the display region 15 including the list selection button 18 to the original display state, the operation for the function selection button 24 can be quickly performed after the scrolling operation for the item list 4 is stopped.

### (Modified Example)

In the present embodiment, the size of the display region 15 in which the list selection button 18 is displayed is reduced when the item list 4 is scrolled, but the technology of the disclosure is not limited thereto. For example, the size of the display region 25 in which the function selection button 24 is displayed may be reduced instead of or in addition to reducing the size of the display region 15. In the case of reducing the size of the display region 25 in which the function selection button 24 is displayed, the display state of the list selection button 18 may be maintained without reducing the size of the display region 15, or the list selection button 18 may be hidden by removing the display region 15.

In the present embodiment, the function selection button 24 is hidden when the item list 4 is scrolled, but the technology of the disclosure is not limited thereto. For example, the display state of the function selection button 24 may be maintained when the item list 4 is scrolled.

In the present embodiment, the display region 15 including the list selection button 18 is arranged on the upper end side of the item list 4, but the technology of the disclosure is not limited thereto, and the display region 15 may be arranged on the lower end side of the item list 4. In the present embodiment, the display region 25 including the function selection button 24 is arranged on the lower end side of the item list 4, but the technology of the disclosure is not limited thereto, and the display region 25 may be arranged on the upper end side of the item list 4. Therefore, the display region 15 including the list selection button 18 may be arranged on the lower end side of the item list 4, and the display region 25 including the function selection button 24 may be arranged on the upper end side of the item list 4. Alternatively, both the display region 15 including the list selection button 18 and the display region 25 including the function selection button 24 may be arranged on the upper end side or the lower end side of the item list 4. It is sufficient if one of the display region 15 and the display region 25 is arranged on the upper end side or the lower end side of the item list 4, and the other of the display region 15 and the display region 25 may be arranged, for example, on the center side of the item list 4.

In the present embodiment, the display region 15 including the list selection button 18 and the display region 25 including the function selection button 24 are provided, but the display region 25 including the function selection button 24 does not have to be provided. In a configuration in which the size of the display region 25 including the function selection button 24 is reduced when the item list 4 is scrolled, the display region 15 including the list selection button 18 does not have to be provided.

In the present embodiment, the display region 15 reduced in size is superimposed on the task item 301 arranged at the uppermost portion of the item list 4, but the technology of the disclosure is not limited thereto. For example, the display region 15 reduced in size may be arranged above the task item 301 arranged at the uppermost portion of the item list 4.

In the present embodiment, the UI control unit 141 returns the display region 15 reduced in size to the original display state after redisplaying the hidden function selection button 24 after the predetermined time elapses since the stopping of the scrolling of the item list 4, but the technology of the disclosure is not limited thereto. For example, after returning the display region 15 reduced in size to the original display state, the hidden function selection button 24 may be redisplayed, or the display region 15 may return to the original display state and the function selection button 24 may be redisplayed at the same time.

In the present embodiment, the task items 301 of the item list 4 are arranged in the vertical direction, and the item list 4 is scrolled in the vertical direction, but the technology of the disclosure is not limited thereto. For example, the task items 301 of the item list 4 may be arranged in the horizontal direction, and the item list 4 may be scrolled in the horizontal direction. In this case, the display region 15 including the list selection button 18 and the display region 25 including the function selection button 24 are arranged at the left and right ends of the item list 4.

In the above-described embodiments, for example, as a hardware structure of a processing unit that executes various processings such as the UI control unit 141, the display control unit 142, the operation receiving unit 143, and the function control unit 144, various processors described below can be used. Examples of the various processors include, in addition to the CPU 111 which is a general-purpose processor that functions as various processing units by executing software (program), a programmable logic device (PLD) in which a circuit configuration can be changed after manufacturing, such as a field programmable gate array (FPGA) and a dedicated circuitry which is a processor having a dedicated circuit configuration designed for executing specific processing, such as an application specific integrated circuit (ASIC).

The various processings may be executed by one of these various processors, or may be executed by a combination of two or more processors of the same type or different types (for example, a plurality of FPGAs and a combination of a CPU and an FPGA). A plurality of processing units may be implemented by one processor. As an example in which a plurality of processing units are implemented by one processor, a processor that implements a function of the entire system including a plurality of processing units with one integrated circuit (IC) chip, such as a system on chip (SoC), may be used.

As described above, the various processing units are implemented using one or more of the various processors as a hardware structure.

More specifically, a circuitry obtained by combining circuit elements such as semiconductor elements can be used as the hardware structure of these various processors.

The technology of the disclosure is also applicable to a computer-readable storage medium (a universal serial bus (USB) memory, a digital versatile disc (DVD)-read only memory (ROM), or the like) that non-transiently stores a control program of the control device, in addition to the control program of the control device.

The present invention is not limited to the above-described embodiments, and various modifications, changes, and improvements can be made without departing from the gist of the disclosure. For example, the above-described modified examples may be configured by combining a plurality of embodiments, if appropriate.

In the present embodiment, the multi-function peripheral 100 is used as an example of the information apparatus, but the technology of the disclosure is not limited thereto. Examples of the information apparatus may include a telephone line apparatus such as a mobile phone or a facsimile machine, a copier or a printer having no communication function, or the like may be used, or an image forming device other than a multi-function peripheral may be used as an example of the information apparatus.

The disclosure of Japanese Patent Application No. 2019-239028 filed on December 27, 2019 is incorporated herein by reference in its entirety. All documents, patent applications, and technical standards mentioned herein are incorporated herein by reference to the same extent as if each individual document, patent application, and technical standard were specifically and individually stated.

### INDUSTRIAL APPLICABILITY

According to the technology of the disclosure, in an information apparatus, a display region of an item list can be expanded by displaying a selection button in a reduced size, and the selection button displayed in a reduced size can be used even during a scrolling operation for the item list. Therefore, the technology of the disclosure enables, for example, quick selection of an item list or function and thus has industrial applicability.

## Claims

1. A control device comprising:
a display control unit that controls display of an item selection screen at which an item list comprising a plurality of items to be selected by a user is displayed in a scrollable manner,
wherein at least one of a list selection button for selecting the item list displayed at the item selection screen or a function selection button for selecting a function to be performed by an information apparatus is displayed at the item selection screen in addition to the item list, at least one of the list selection button or the function selection button is arranged at an end side of the item list in a scrolling direction at the item selection screen, and the display control unit reduces a size of a display region of at least one of the list selection button or the function selection button at the item selection screen in a case in which the item list is scrolled.

2. The control device according to claim 1, wherein the list selection button is a button for selecting one item list to be displayed at the item selection screen, from a plurality of types of item lists, and
the display control unit reduces the size of the display region of the list selection button in a case in which the item list is scrolled.

3. The control device according to claim 1 or 2, wherein the display control unit superimposes the display region, which is reduced in size, on the item list in a case in which the item list is scrolled.

4. The control device according to any one of claims 1 to 3, wherein the display control unit displays the list selection button at one end side of the item list in the scrolling direction and displays the function selection button at another end side of the item list in the scrolling direction.

5. The control device according to claim 4, wherein the display control unit reduces the size of the display region of the list selection button displayed at the item selection screen and hides the function selection button, in a case in which the item list is scrolled.

6. The control device according to claim 5, wherein in a case in which the scrolling of the item list is stopped, the display control unit displays the hidden function selection button, and then returns the display region reduced in size to an original display state.

7. A control program for causing a computer to function as a control device, the control device comprising: a display control unit that controls display of an item selection screen at which an item list comprising a plurality of items to be selected by a user is displayed in a scrollable manner, wherein at least one of a list selection button for selecting the item list displayed at the item selection screen or a function selection button for selecting a function to be performed by an information apparatus is displayed at the item selection screen in addition to the item list, at least one of the list selection button or the function selection button is arranged at an end side of the item list in a scrolling direction at the item selection screen, and the display control unit reduces a size of a display region of at least one of the list selection button or the function selection button at the item selection screen in a case in which the item list is scrolled.
